# EUROPEAN PATENT APPLICATION

(11) **EP 0 523 703 A2**
(43) Date of publication of application: **20.01.1993**
(21) Application number: 92112178.6
(22) Date of filing: 16.07.1992
(51) Int. Cl.: H04N 1/21, G11C 5/14

(54) **Magnetic recording apparatus**

(30) Priority: 18.07.1991 JP 178308/91
(71) Applicant: CANON KABUSHIKI KAISHA, Tokyo (JP)
(72) Inventor: Nakajima, Toshihiko, c/o Canon Kabushiki Kaisha, Ohta-ku, Tokyo (JP)
(74) Representative: Tiedtke, Harro, Dipl.-Ing.

(57) **Abstract**

A magnetic recording apparatus which is capable of recording still images along with motion images on a magnetic tape includes an image memory capable of storing a plurality of still images, an instruction member for issuing an instruction to start recording still images, and a control circuit arranged to cause the image memory to temporarily store one or more still images if a still image is in process of being recorded on the magnetic tape when the instruction is issued by the instruction member and to cause the still images stored in the image memory to be recorded on the magnetic tape upon completion of an image-data processing action on the still image which has been in process of being recorded.

## Description

### Background of the Invention:

### Field of the Invention:

This invention relates to a magnetic recording apparatus such as a video tape recorder (hereinafter referred to as a VTR) or a camera-integrated VTR (hereinafter referred to as a video camera) of the kind arranged to be capable of recording still images together with motion images on a magnetic recording medium.

### Description of the Related Art:

In the field of magnetic recording, a demand for high-density recording has increased of late. To meet this demand, VTRs have come to be arranged to perform recording at a higher density by lowering the traveling speed of the tape. However, in a case where audio signals are recorded by using a stationary head, for example, the reduction of the tape travel speed brings forth a problem in that the quality of a reproduced sound is degraded because it is impossible to have a sufficiently high relative speed. According to one of known methods for solving this problem, the length of each of recording tracks to be scanned by a rotary head is extended to be longer than the conventional length, and audio signals having those time-base compressed are recorded one after another in the respective additional parts of the extended recording tracks. More specifically, in the case of a rotary-two-head helical scanning type VTR, the VTR has conventionally been arranged to have a magnetic tape wrapped at least 180 degrees around a rotary cylinder. Whereas, in accordance with the above-mentioned method, the magnetic tape is wrapped at least (180 + ϑ) degrees around the rotary cylinder, and an audio signal which has been pulse-code-modulated (PCM) and time-base-compressed is recorded in the additional part wrapped ϑ degrees (hereinafter referred to as the PCM area).

Meanwhile, an apparatus which is arranged to record a still image in the form of a digital signal in the PCM areas has been proposed. However, for recording one still image, this apparatus takes an excessively long period of time, such as from 0.8 to 11.1 sec, depending on the recording mode thereof. This apparatus thus has presented the problem that still pictures cannot be taken continuously at intervals of time shorter than a period of time required for recording one still image on the magnetic tape.

### Summary of the Invention:

In view of the above-mentioned problem, it is an object of this invention to provide a magnetic recording apparatus which is capable of continuously taking still image at intervals of time shorter than a period of time required for recording one still image on a magnetic tape.

To attain this object, a magnetic recording apparatus which is arranged according to an embodiment of this invention to be capable of recording still images together with motion images on a magnetic recording tape comprises: an image memory capable of storing a plurality of still images; instruction means for issuing an instruction to start recording still images; and control means arranged to cause the image memory to temporarily store one or more still images if a still image is in process of being recorded on the magnetic tape when the instruction is issued by the instruction means and to cause the still images stored in the image memory to be recorded on the magnetic tape upon completion of an image-data processing action on the still image which has been in process of being recorded.

In the embodiment of this invention, an auxiliary image memory is arranged to be capable of storing a plurality of still images. Even in a case where a still image is in process of being recorded on a magnetic tape, still images are temporarily stored in the auxiliary image memory and, after that, the still images thus stored are serially read out and recorded on the magnetic tape one after another. The embodiment thus permits taking still images continuously at intervals of time shorter than a period of time required for recording one still image on the magnetic tape.

The above and other objects and features of this invention will become apparent from the following detailed description of an embodiment thereof taken in connection with the accompanying drawings.

### Brief Description of the Drawings:

Fig. 1 is a block diagram showing the circuit arrangement of a camera-integrated VTR (magnetic recording apparatus) which is arranged according to this invention as an embodiment thereof.
Fig. 2 is a plan view showing in outline a tape transport system of the magnetic recording apparatus which is arranged to wrap the tape around a rotary cylinder to such a degree as to include the PCM recording area.
Fig. 3 is a schematic illustration showing the recording loci obtained on a tape by the apparatus shown in Fig. 2.

### Detailed Description of the Preferred Embodiment:

An embodiment of this invention is described in detail below with reference to the drawings:

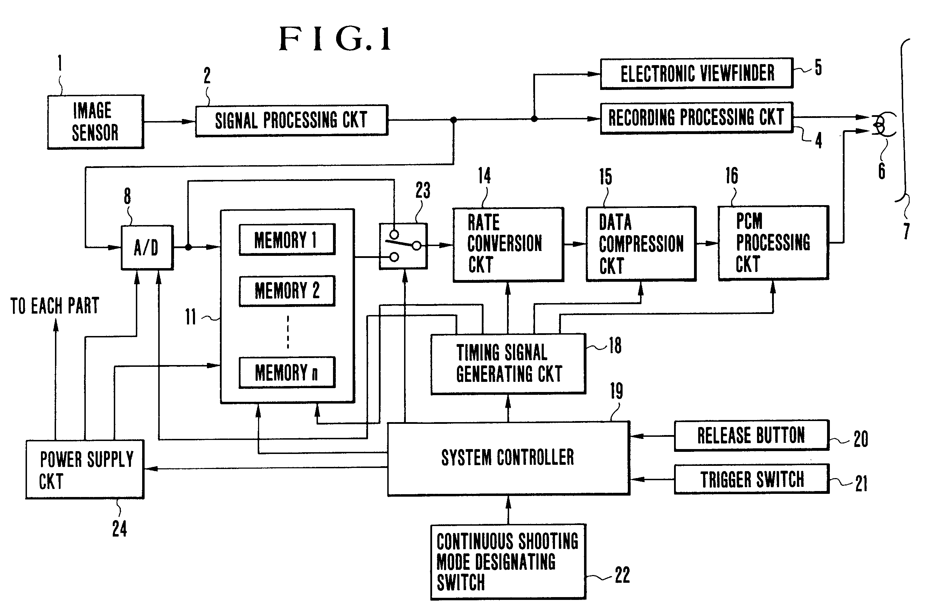

Fig. 1 shows the circuit arrangement of a camera-integrated VTR (magnetic recording apparatus) which is arranged as the embodiment of this invention. The illustration includes an image sensor 1 which is composed of a CCD or the like and is arranged to convert into an electrical signal an object image formed thereon through an optical system (not shown). A signal processing circuit 2 is arranged to convert the electrical signal into a video signal. A recording processing circuit 4 is arranged to perform a processing action required before recording the video signal on a magnetic tape 7 through a recording head 6. An electronic viewfinder 5 is provided for image monitoring. An A/D (analog-to-digital) converter 8 is arranged to convert into digital data the video signal processed by the signal processing circuit 2. A nonvolatile image memory 11 which is a dynamic RAM or the like is arranged to store the video-signal data supplied from the A/D converter 8. The memory 11 is capable of storing a plurality of still images. A rate conversion circuit 14 is arranged to convert the rate of data outputted from the image memory 11 into a rate suited for recording on the magnetic tape 7. A data compression circuit 15 is arranged to compress the data outputted from the rate conversion circuit 14. A PCM (pulse code modulation) processing circuit 16 is arranged to add to the data compressed by the data compression circuit 15 an error detection and correction code, ID (identification) data, block address data, etc., or to perform an interleaving process on the compressed data. A timing signal generating circuit 18 is arranged to generate a timing signal for each of the circuit elements 8, 11, 14, 15 and 16. A system controller 19 is arranged to control the action of each of various parts of the VTR, still image recording and special effects. An ordinary microcomputer can be employed as the system controller 19. A release button 20 is provided for instructing the VTR to start recording a still image. The on-off signal of the release button 20 is supplied to the system controller 19.

Further, a trigger switch 21 is provided for instructing the VTR to start recording a motion image. The trigger switch 21 and the release button 20 may be formed coaxially as first and second steps of one and the same switch. Further, the release button 20 is arranged to be operable even while the trigger switch 21 is turned on. A continuous shooting mode designating switch 22 is provided for designating the timing of continuous shooting in the continuous shooting mode. A switch 23 is provided for switching from the use of the memory 11 over to the nonuse of the memory 11 and vice versa. The switch 23 is arranged to allow the output of the memory 11 to be supplied to the rate conversion circuit 14, according to the designated timing of the continuous shooting, only when writing into the memory 11 is necessary. Further, a power supply circuit 24 is arranged to supply electric power to the A/D converter 8 when the recording of a still image is to be performed and to supply a sufficient power to the memory 11 when data must be written into the memory 11. If writing data into the memory 11 is not necessary, the power supply circuit 24 supplies the memory 11 with only a small amount of power sufficient for retaining the contents of the memory 11, so that electric power can be saved.

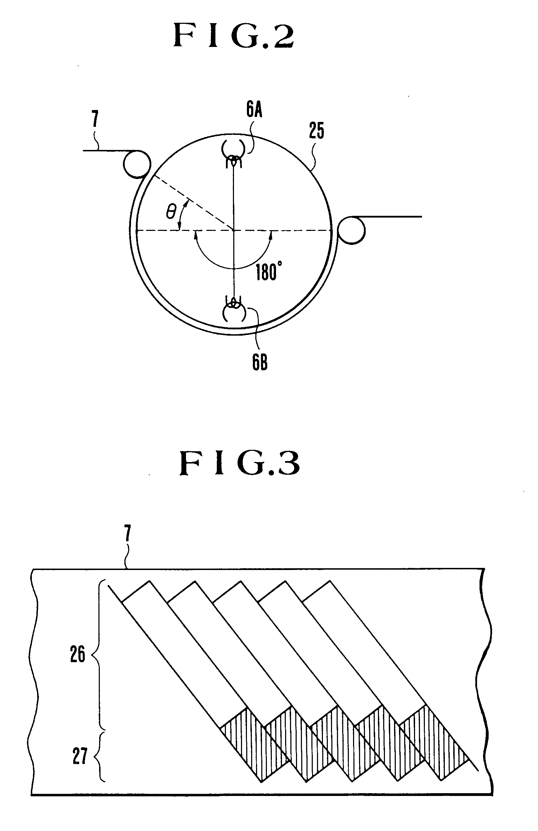

Fig. 2 shows a tape transport system of the VTR. Fig. 3 shows the recording loci obtained on the magnetic tape by the arrangement of the VTR shown in Fig. 2. In Fig. 2, reference numeral 7 denotes a magnetic tape. Reference numeral 25 denotes a rotary cylinder. Reference numerals 6A and 6B denote heads mounted on the rotary cylinder 25. In Fig. 3, reference numeral 26 denotes video signal areas of the recording tracks formed on the tape 7. Reference numeral 27 denotes PCM areas of these tracks formed on the tape 7. The video signal areas 26 are traced by the heads 6A and 6B within the range of 180 degrees around the rotary cylinder 25. The PCM areas 27 are traced by the heads within the range of ϑ degrees around the rotary cylinder 25. With the VTR arranged in this manner, a still image can be recorded in the form of a digital signal in the PCM areas 27 while a video signal is recorded on the magnetic tape 7. Information on one still image can be completely recorded on the magnetic tape 7 by scanning a plurality of PCM areas 27. This method not only permits taking still images as well as taking motion images by using one and the same photographing device and one and the same recording medium but also gives a still image with a higher picture quality than a still image obtainable with the conventional VTR by stopping the magnetic tape from traveling and by reproducing a video signal recorded in one and the same track formed on the magnetic tape.

The operation of the VTR according to the embodiment arranged in the above-stated manner is described as follows: An electrical signal outputted from the image sensor 1 as a result of a picture-taking action is first converted into a video signal by the signal processing circuit 2. The video signal is converted into a recording signal by the recording processing circuit 4. The recording signal thus obtained is recorded on the magnetic tape 7 by the head 6. The state of recording can be monitored through the electronic viewfinder 5.

Meanwhile, when the release button 20 is pushed by the operator, the A/D converter 8 converts the video signal into digital video data. The digital video data is stored in the image memory 11. The stored video data is supplied to the rate conversion circuit 14 to be subjected to the rate conversion process. The rate-converted video data is compressed by the data compression circuit 15. The compressed data is supplied to the PCM processing circuit 16 to be converted into PCM data for recording. The PCM data thus obtained is recorded by the head 6 in still-image recording areas of the magnetic tape 7 (corresponding to the PCM areas 27 shown in Fig. 3).

As mentioned in the foregoing, the image memory 11 is capable of storing a plurality of still images. If the VTR is in process of performing a recording action on the magnetic tape when the release button 20 is pushed, the system controller 19 causes a plurality of taken still images to be temporarily stored one after another in memory areas which are not currently used among the memory areas 1, 2 to "n" arranged within the image memory 11. Upon completion of the processing of data of the still image which has been in process of being recorded, the system controller 19 reads out the stored still images from the image memory 11 one after another and causes them to be recorded on the magnetic tape 7.

As described above, in the embodiment described above, the VTR is provided with an auxiliary image memory which is arranged to be capable of storing a plurality of still images. This arrangement enables the VTR to take still images at intervals of time shorter than a period of time required for recording one still image on the magnetic tape.

A magnetic recording apparatus which is capable of recording still images along with motion images on a magnetic tape includes an image memory capable of storing a plurality of still images, an instruction member for issuing an instruction to start recording still images, and a control circuit arranged to cause the image memory to temporarily store one or more still images if a still image is in process of being recorded on the magnetic tape when the instruction is issued by the instruction member and to cause the still images stored in the image memory to be recorded on the magnetic tape upon completion of an image-data processing action on the still image which has been in process of being recorded.

## Claims

1. A recording apparatus capable of recording still images together with motion images on a main recording medium, comprising:
a) an image memory capable of storing a plurality of still images;
b) instruction means for issuing an instruction to start recording still images; and
c) control means arranged to cause said image memory to temporarily store one or more still images if a still image is in process of being recorded on the main recording medium when the instruction is issued by said instruction means and to cause the still images stored in said image memory to be recorded on the main recording medium upon completion of a recording action on the still image which has been in process of being recorded.

2. An apparatus according to claim 1, wherein said main recording medium includes a magnetic tape.

3. An apparatus according to claim 1, further comprising means for designating timing for taking a still image.

4. An apparatus according to claim 1, wherein said control means is arranged to detect whether or not a still image is in process of being recorded.

5. An image pickup device comprising:
a) image sensing means for converting image light of an object into electrical signals;
b) holding means for holding said electrical signals outputted from said image sensing means; and
c) control means arranged to supply to said holding means an amount of electric power required for a writing action or reading action during the process of writing into said holding means and the process of reading from said holding means and an amount of electric power required for a holding action during other than the process of writing into said holding means and the process of reading from said holding means.

6. A device according to claim 5, wherein said image sensing means includes a CCD.

7. A device according to claim 5, wherein said holding means includes a dynamic RAM.

8. A device according to claim 5, wherein said holding means includes means capable of storing information on a plurality of still images.

9. A device according to claim 5, wherein said holding means includes a nonvolatile memory.
